# EUROPÄISCHE PATENTSCHRIFT

(11) **EP 1 197 133 B1**
(45) Veröffentlichungstag und Bekanntmachung des Hinweises auf die Patenterteilung: **01.12.2004**
(21) Anmeldenummer: 01122989.5
(22) Anmeldetag: 26.09.2001
(51) Int. Cl.: A01C 7/04

(54) **Messsystem für ein Landwirtschaftliches Sägerät**
Measuring system for an agricultural seed drill
Système de mesure pour un semoir agricole

(30) Priorität: 10.10.2000 US 685808
(43) Veröffentlichungstag der Anmeldung: 17.04.2002
(73) Patentinhaber: DEERE & COMPANY, Moline, Illinois 61265-8098 (US)
(72) Erfinder: Martin, Robert Wallace, Parkview, Iowa 52748 (US); Portillo, Netza, Coal Valley, IL 61240 (US); Lodico, James Irwin, Hampton, IL 61256 (US)
(74) Vertreter: Holst, Sönke, Dr.

(56) Entgegenhaltungen:
- DE-B- 1 044 487
- DE-B- 1 201 106
- DE-B- 1 205 329
- US-A- 5 058 766
- US-A- 5 784 985

## Beschreibung

Die Erfindung betrifft ein Messsystem für ein landwirtschaftliches Sägerät, mit einem stationären Gehäuse, das einen Saatguteinlass zum Empfangen von Saatgut und einen Saatgutauslass umfasst, durch den zugemessenes Saatgut ausgegeben wird, einem um eine Drehachse drehbar im stationären Gehäuse angeordneten, kreisförmigen Element, das einzelne Saatgutaufnahmezellen zum Aufnehmen und Transportieren einzelner Saatgutkörner aufweist, wobei durch den Saatguteinlass in das stationäre Gehäuse eintretendes Saatgut zwischen dem stationären Gehäuse und dem kreisförmigen Element einen Saatguthaufen bildet und einzelne Saatgutkörner aus dem Saatguthaufen von den Saatgutaufnahmezellen im kreisförmigen Element aufgenommen werden, wenn die Saatgutaufnahmezellen durch den Saatguthaufen drehen und daraus freigesetzt werden, wenn sie zum Saatgutauslass hin drehen, und wobei das stationäre Gehäuse mit einem in seinem Inneren angeordneten Saatgutausstoßzusammenbau versehen ist, der ein drehbares Rad aufweist, um Saatgut aus den einzelnen Saatgutaufnahmezellen heraus und zum Saatgutauslass zu bewegen.

In den Vereinigten Staaten wird die überwiegende Mehrzahl landwirtschaftlicher Nutzpflanzen mit Reihenpflanzgeräten, Drillmaschinen oder pneumatischen Sämaschinen gesät. Reihenpflanzgeräte sind geschaffen, Saatgut in hinreichend weit beabstandeten Reihen abzulegen, um Unkräuter durch Bearbeitung kontrollieren zu können und die Ernteeffizienz zu verbessern. Drillmaschinen und pneumatische Sägeräte werden im Kompaktpflanzenanbau verwendet, wenn der Reihenabstand zu gering ist, um eine Kultivierung oder andere Kultivierpraktiken zu ermöglichen.

Alle drei Sämaschinen messen Saatgut ab, so dass es gleichmäßig auf einem Feld eingepflanzt werden kann. Die Reihenpflanzgeräte weisen in der Regel die ausgefeiltere Messausrüstung zum Vereinzeln von Saatgut auf, während die Drillmaschinen und pneumatischen Sägeräte volumetrische Messsysteme verwenden, die ein festgelegtes Volumen an Saatgut auf jeden linearen Meter abgeben.

Mechanische Messsysteme, die an Reihenpflanzgeräten verwendet werden, sind beispielsweise Saatplattenmesssysteme, Fingeraufnehmermesssysteme und Bürstenmesssysteme. Bei einem Bürstenmesssystem bewegt sich ein rotierendes, kreisförmiges Element, das eine Vielzahl an Saatgutaufnahmezellen hat, durch einen Saatguthaufen. Saatgut wird durch Bürsten in den Saatgutaufnahmezellen festgehalten. Bürstenmesssysteme können auch mit externen Saatgutausstoßzusammenbauten ausgestattet sein, um in der Saatgutaufnahmezelle gefangenes Saatgut zu befreien, s. US 5 784 985 A. Diese externen Saatgutausstoßzusammenbauten werden gegenwärtig an Bürstenmesssystemen verwendet, die von der Anmelderin der vorliegenden Anmeldung vertrieben werden. Die an den Produktionsversionen verwendeten Ausstoßräder sind Zahnräder, die sich nach außen erstreckende radiale Zähne aufweisen, die in die Saatgutaufnahmezellen eintreten, um eingeklemmtes Saatgut freizusetzen. Bei diesen extern angebrachten Saatgutausstoßzusammenbauten wird das eingeklemmte Saatgut wieder dem Saatguthaufen zugeführt. Somit hat das Messsystem wegen der blockierten Saatgutaufnahmezelle eine Pflanzstelle ausgelassen. Außerdem kann das zuvor eingeklemmte Saatgutkorn in dieselbe oder eine andere Saatgutaufnahmezelle eintreten und dort aufgrund der einzigartigen Geometrie dieses Saatgutkorns wieder verklemmen.

In der DE 1 205 329 B wird ein Messsystem eingangs genannter Art beschrieben. Es weist ein mit Vertiefungen ausgestattetes, zylindrisches Särad auf, das drehbar innerhalb eines Gehäuses angeordnet ist. Das Gehäuse ist an der Oberseite mit einer Öffnung versehen, die sich gegen einen Saatgutbehälter öffnet und an seiner Unterseite mit einer weiteren Öffnung versehen, durch die ausgeworfene Samen austreten können. Bei einer Drehung des Särads wird somit Saatgut in den Vertiefungen aufgenommen und zur Auswurföffnung transportiert. Innerhalb des Särads ist eine Büchse angeordnet, die die Vertiefungen des Särads nach innen abdeckt und eine Achse trägt, auf der Auswerferräder sitzen, deren Zapfen in die Vertiefungen eingreifen. Als nachteilig ist bei diesem Messsystem anzusehen, dass die Büchse und das Särad in sich relativ starr sind, so dass Saatgut beim Zumessen beschädigt werden kann und nicht sichergestellt ist, dass sich jeweils nur ein Saatkorn in jeder Vertiefung des Särads befindet. Außerdem ist die Anbringung der Auswerferräder aufwendig, da eine separate Büchse dafür benötigt wird.

Die der Erfindung zu Grunde liegende Aufgabe wird darin gesehen, einen einfachen und effektiven Saatgutausstoßzusammenbau für ein Messsystem bereitzustellen.

Diese Aufgabe wird erfindungsgemäß durch die Lehre des Patentanspruches 1 gelöst, wobei in den weiteren Patentansprüchen Merkmale aufgeführt sind, die die Lösung in vorteilhafter Weise weiterentwickeln.

Ein Messsystem ist mit einem stationären Gehäuse ausgestattet, das einen Einlass zum Empfang von Saatgut aus einem Saatgutvorratsbehälter und einen Auslass aufweist, durch den zugemessenes Saatgut in ein Saatrohr ausgegeben wird. Ein kreisförmiges Element mit einer Vielzahl um seinen Umfang verteilter Saatgutaufnahmezellen ist drehbar im Gehäuse angeordnet. Die Saataufnahmezellen wirken mit der Saatgutfangzone zusammen, um einzelne Saatgutkörner einzufangen. Am Auslass werden die einzelnen Saatgutkörner von den Saatgutaufnahmezellen freigegeben. Es ist ein intern im Gehäuse befestigter Saatgutausstoßzusammenbau vorgesehen, der gefangene oder eingeklemmte Saatgutkörner aktiv aus den Saatgutaufnahmezellen auswirft und in den Saatgutauslass hinein befördert. Der Saatgutausstoßzusammenbau umfasst ein drehbares Rad. Dadurch wird eine Pflanzstelle nicht durch ein eingefangenes Saatgutkorn ausgelassen. Das Gehäuse ist mit einer sich radial erstreckenden Bürste ausgestattet, die gemeinsam mit dem stationären Gehäuse die Saatgutfangzone, d. h. den Bereich definiert, in dem das Saatgut in die Saatgutaufnahmezellen gedrückt wird. Ein ersetzbarer Bürstenhalterring haltert diese Bürste und auch den Saatgutausstoßzusammenbau. Der Bürstenhalterring schirmt das Rad des Saatgutausstoßzusammenbaus gegenüber dem Saatguthaufen ab.

Vorzugsweise umfasst das Rad des Saatgutausstoßzusammenbaus ein Zahnrad mit sich radial erstreckenden, überstehenden Zähnen, die in die einzelnen Saatgutaufnahmezellen des rotierenden Elements eindringen und das Saatgut daraus hinausfördern. Die Drehachse des Rads ist vorzugsweise parallel zu der des kreisförmigen Elements orientiert.

Im Einzelnen kann der aus dem Rad und einem das Rad halternden Gehäuse aufgebaute Saatgutausstoßzusammenbau integraler Teil des Bürstenhalterrings sein. Dann ist der Bürstenhalterring mit einer Achse ausgestattet, auf dem sich das Rad des Saatgutausstoßzusammenbaus dreht.

Als kreisförmiges, rotierendes Element, das am Umfang mit Saatgutaufnahmezellen versehen ist, kommt insbesondere eine Glocke in Frage.

In den Zeichnungen ist ein nachfolgend näher beschriebenes Ausführungsbeispiel der Erfindung dargestellt. Es zeigt:
- Fig. 1: eine Explosionsansicht eines erfindungsgemäßen Messsystems,

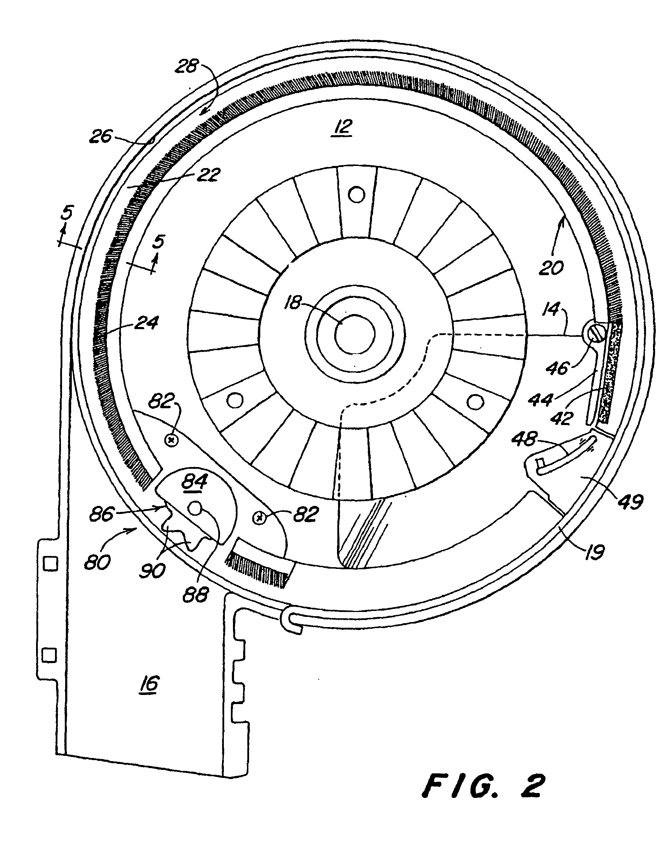

- Fig. 2: eine Seitenansicht des Gehäuses und des Bürstenhalterrings,
- Fig. 3: eine Seitenansicht der Glocke des Messsystems,
- Fig. 4: eine Vorderansicht der Glocke des Messsystems,
- Fig. 5: eine Querschnittsansicht entlang der Linie 5-5, die die Saatgutfangzone des Messsystems zeigt, und
- Fig. 6: eine perspektivische Ansicht der Nabe.

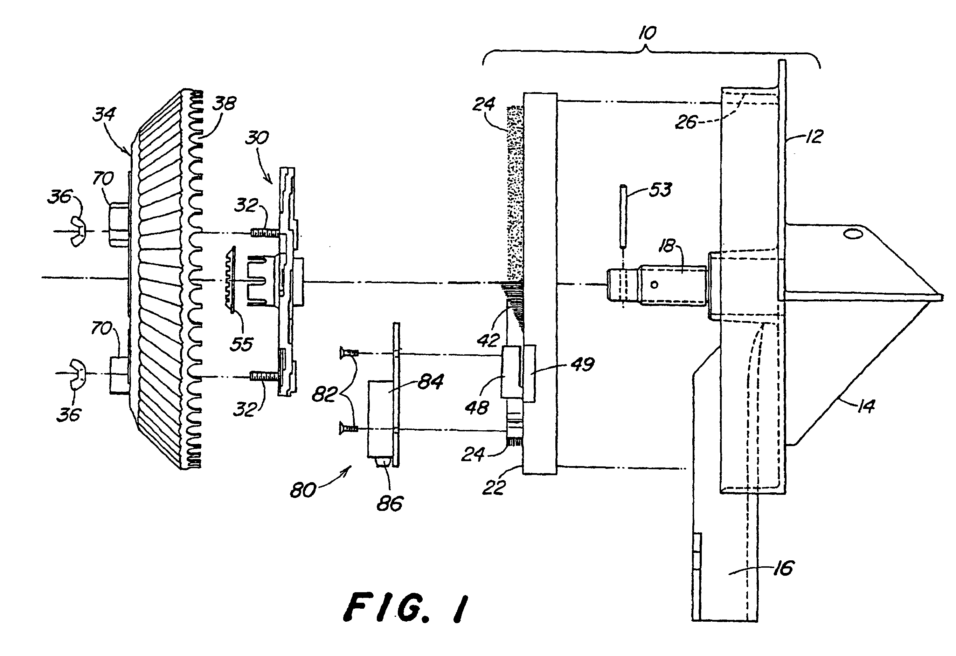

Figur 1 ist eine Explosionsdarstellung eines Bürstenmesssystems. Das dargestellte Bürstenmesssystem kann an Reihenpflanzgeräten, Drillmaschinen und pneumatischen Sämaschinen benutzt werden. Es ist besonders in Reihenpflanzgeräten nützlich, insbesondere zur Verwendung bei Sojabohnen und anderen Erntegütern. Das Messsystem umfasst ein stationäres Gehäuse 10 mit zwei Elementen. Das erste Element ist eine feste Einheit 12 aus Metall, die mit einem Saatguteinlass 14 und einem Saatgutauslass 16 versehen ist. Die Einheit 12 ist mit einer sich axial erstreckenden Welle 18 versehen. Ein Verschleißstreifen 19 ist mittels nicht gezeigter Zapfen, die in Befestigungslöcher in der Einheit 12 eingreifen, an der inneren Wand der Einheit 12 befestigt. Der Verschleißstreifen 19 ist aus federndem Metall geformt, das einen größeren Radius als die Einheit 12 hat, so dass er an Ort und Stelle bleibt, wenn er an der Einheit 12 befestigt ist.

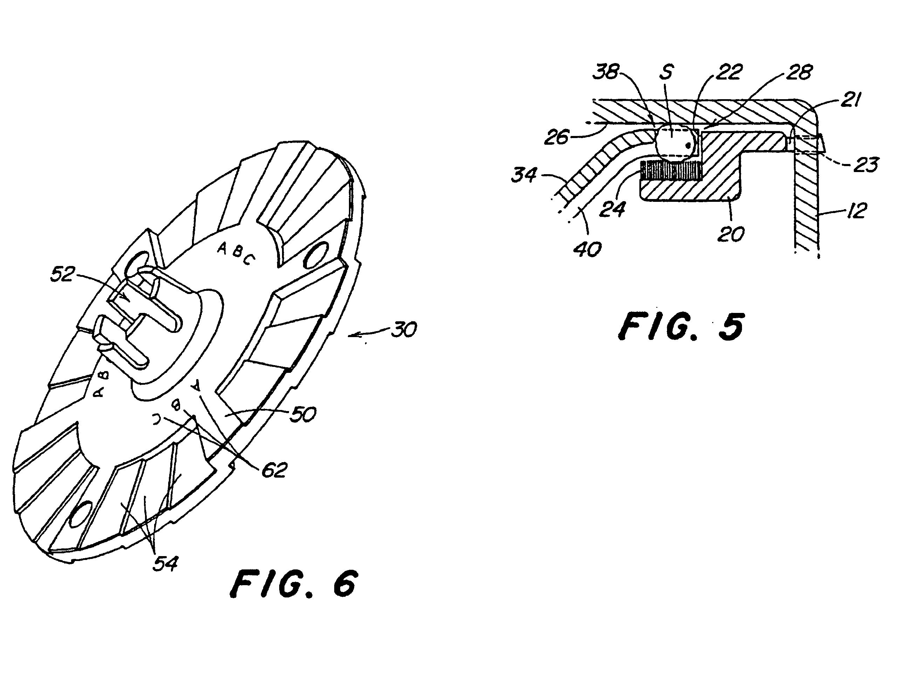

Das zweite Element des Gehäuses 10 umfasst einen ersetzbaren Bürstenhalterring 20 aus Kunststoff, der durch Zapfen 21 aus Kunststoff am ersten Element des Gehäuses 10 befestigt ist, s. Figur 5. Zapfen 21 sind in Aufnahmeöffnungen 23, die in der Einheit 12 geformt sind, aufgenommen. Der Bürstenhalterring 20 umfasst eine erste axiale Wand 22 und eine sich radial erstreckende Bürste 24. Die erste axiale Wand 22 und die sich radial erstreckende Bürste 24 bilden mit der äußeren radialen Wand 26 eine Saatgutfangzone 28 zum Festhalten einzelner Saatgutkörner S, was am Besten in Figur 5 erkennbar ist.

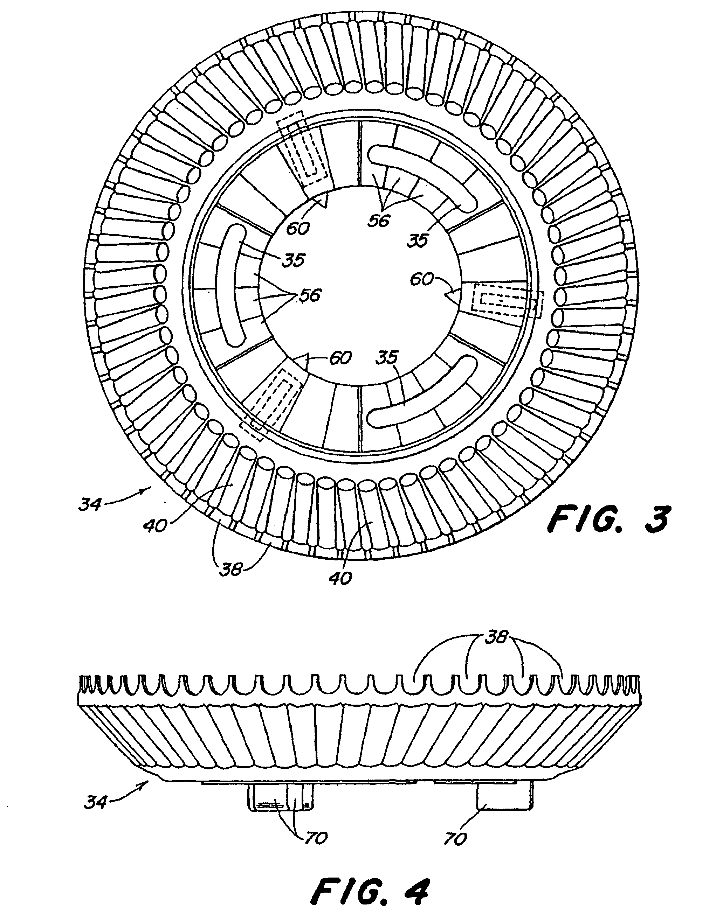

Eine Nabe 30 ist drehbar auf der Welle 18 befestigt und mit drei Schrauben 32 ausgestattet. Ein kreisförmiges Element in der Form einer Glocke 34 ist an der Nabe 30 dadurch befestigt, dass die Schrauben 32 durch gekrümmte Schlitze 35, die in der Glocke 34 geformt sind, gesteckt wurden und die Glocke 34 durch Flügelmuttern 36 daran befestigt ist. Die Glocke 34 ist am Besten in den Figuren 3 und 4 dargestellt, sie umfasst eine Reihe von Saatgutaufnahmezellen 38, die um den axialen Umfang der Glocke 34 angeordnet sind. Jede Saatgutaufnahmezelle 38 ist mit einer sich nach innen erstreckenden Rinne 40 ausgestattet, die dabei hilft, Saatgut in die Saatgutaufnahmezellen 38 einzuführen. Die Breite und Tiefe der Rinnen 40 wird kleiner, je näher die Rinne 40 der Saatgutaufnahmezelle 38 kommt. Wie in Figur 5 erkennbar, bilden die Saatgutaufnahmezellen 38 eine zweite axiale Wand in der Saatgutaufnahmezone, um vereinzeltes Saatgut einzufangen. Obwohl das kreisförmige Element in der dargestellten Ausführungsform eine Glocke 34 ist, ist anzumerken, dass das kreisförmige Element auch eine scheibenförmige oder zylindrische Konfiguration haben könnte.

Der Bürstenhalterring 20 ist in der Nähe des Saatguthaufens mit einer flexiblen und federnden Lasche 48 ausgestattet. Die Lasche 48 ist mit einer Basis 49 versehen, die am Bürstenhalterring 20 angebracht ist. Die Lasche 48 übt eine geringe, nach unten gerichtete Kraft auf das Saatgut aus, um einzelne Saatkörner in den Saatgutaufnahmezellen 38 zu halten. Der Bürstenhalterring 20 ist außerdem mit einer sich axial erstreckenden Bürste 42 ausgestattet, die eine dreieckige Konfiguration hat. Diese Bürste 42 ist zwischen der Lasche 48 und der Saatgutaufnahmezone angeordnet. Die Bürste 42 wird durch eine Befestigungsplatte 44 an Ort und Stelle gehaltert. Die Befestigungsplatte 44 ist außerdem mit einer Schraube 46 ausgestattet, die in den Bürstenhalterring 20 geschraubt ist, um die Befestigungsplatte 44 am Bürstenhalterring 20 zu sichern.

Im Betrieb wird Saatgut aus einem Saatgutvorrat durch den Einlass 14 im Messsystem abgelegt. Das Saatgut sammelt sich in einem Saatguthaufen zwischen der Glocke 34 und dem stationären Gehäuse 10. Wenn die Glocke im Uhrzeigersinn gedreht wird, wird Saatgut aus dem Saatguthaufen durch die Rinnen 40 in die Saatgutaufnahmezellen 38 geleitet. Nachdem ein einzelnes Saatgutkorn in eine Saatgutaufnahmezelle 38 eingetreten ist, wird sie durch die flexible und federnde Lasche 48 an Ort und Stelle festgehalten. Die sich axial erstreckende Bürste 42 treibt die überzähligen Saatgutkörner von der Saatgutaufnahmezelle 38 fort, so dass nur ein Saatgutkorn in jeder Saatgutaufnahmezelle 38 verbleibt, bevor sie die Saatgutfangzone erreicht. Wenn das Saatgutkorn die Saatgutfangzone erreicht, wird es durch die Zentrifugalkraft nach außen gegen die äußere radiale Wand 26 gezwungen, die in der Einheit 12 geformt ist. Sie wird axial durch die erste axiale Wand 22 und die zweite axiale Wand, die durch die Saatgutaufnahmezellen 38 gebildet wird, an Ort und Stelle festgehalten. Die sich radial erstreckende Bürste 24 bildet die innere radiale Wand der Saatgutfangzone. Die Bürste 24 hält das Saatgut in den Saatgutaufnahmezellen 38, wenn das Messsystem angehalten wird und die Schwerkraft die auf das Saatgut wirkende Zentrifugalkraft der rotierenden Glocke 34 überschreitet. Die Bürste 24 stellt außerdem ohne Zerstörung verschiedener Komponenten eine flexible Fläche zur Kompensation überfüllter Saatgutzellen bereit. Wenn das Saatgut in den Auslassbereich eintritt, fällt die äußere radiale Wand 26 fort und bildet einen Teil des Saatgutauslasses 16. Auf diese Weise wird das Saatgut in den Saatgutauslass 16 fallen gelassen. Der Auslass ist wiederum mit einem Saatgutrohr gekoppelt, das zugemessenes Saatgut in die Pflanzfurche leitet. Um zu verhindern, dass Saatgut im Saatguthaufen das Messsystem kurzschließt (oder umgeht), erstreckt sich die Bürste 24 bis zum Saatgutauslass 16.

Der Saatgutausstoßzusammenbau 80 ist durch Schrauben 82 fest am Bürstenhalterring 20 angebracht. Der Saatgutausstoßzusammenbau 80 umfasst ein Gehäuse 84 und ein drehbares Zahnrad 86. Das Zahnrad 86 ist auf einer im Gehäuse 84 angeordneten Welle 88 drehbar befestigt. Bei einer alternativen Konfiguration könnten das Gehäuse 84 und die Welle 88 mit dem Bürstenhalterring 20 einteilig gegossen sein. Das Zahnrad 86 ist mit sich nach außen erstreckenden radialen Zähnen 90 versehen, die derart beabstandet sind, dass sie in die einzelnen Saatgutaufnahmezellen 38 der Glocke 34 eingreifen.

Die Nabe 30, die am Besten in den Figuren 1 und 6 dargestellt ist, ist ein Scheibenelement 50 aus Kunststoff mit einer ringförmigen Bohrung 52. Die ringförmige Bohrung 52 ist an der Welle 18 befestigt und durch einen Stift 53 und einen Haltering 55 an Ort und Stelle festgehalten. Der Umfang des Scheibenelements 50 ist mit einer Reihe von Stufen 54 versehen, die in der Glocke 34 geformten Stufen 56 entsprechen. Die Stufen enthalten ein Mittel zum Einstellen der axialen Position der Glocke 34 relativ zum stationären Gehäuse 10. Durch ein Einstellen der Drehposition der Glocke 34 relativ zur Nabe 30 kann die axiale Entfernung der Glocke 34 vom stationären Gehäuse 10 kontrolliert werden. Ein Anzeigemittel einschließlich eines Zeigers 60 an der Glocke 34 und Anzeigemarkierungen 62 auf der Nabe 30 werden benutzt, um den Landwirt über die Position der Glocke 34 relativ zur Nabe 30 zu informieren. Durch Prüfen einer Tabelle kann der Landwirt dann die Größe der einzelnen Saatguthalteflächen feststellen und das Verhältnis von Nabe 30 und Glocke 34 entsprechend unterschiedlicher Saatgutkorngrößen verändern. Die Welle 18 ist mit einem nicht gezeigten Kupplungselement ausgestattet, um die Welle 18 mit einer Quelle für ein rotatives Antriebsmoment zu koppeln, um die Nabe 30 und die Glocke 34 zu drehen.

Fingergriffe 70 erstrecken sich von der Glocke 34 axial nach außen und werden verwendet, dem Landwirt beim Drehen der Glocke 34 relativ zur Nabe 30 zu unterstützen, wenn er die axiale Position der Glocke 34 gegenüber der Nabe 30 einstellt. Außerdem werden die Fingergriffe 70 verwendet, die Glocken im gestapelten Zustand zu beabstanden, um die Saatgutaufnahmezellen 38 zu schützen.

## Patentansprüche

1. Messsystem für ein landwirtschaftliches Sägerät, mit einem stationären Gehäuse (10), das einen Saatguteinlass (14) zum Empfangen von Saatgut und einen Saatgutauslass (16) umfasst, durch den zugemessenes Saatgut ausgegeben wird, einem um eine Drehachse drehbar im stationären Gehäuse (10) angeordneten, kreisförmigen Element, das einzelne Saatgutaufnahmezellen (38) zum Aufnehmen und Transportieren einzelner Saatgutkörner aufweist, wobei durch den Saatguteinlass (14) in das stationäre Gehäuse (10) eintretendes Saatgut zwischen dem stationären Gehäuse (10) und dem kreisförmigen Element einen Saatguthaufen bildet und einzelne Saatgutkörner aus dem Saatguthaufen von den Saatgutaufnahmezellen (38) im kreisförmigen Element aufgenommen werden, wenn die Saatgutaufnahmezellen (38) durch den Saatguthaufen drehen und daraus freigesetzt werden, wenn sie zum Saatgutauslass (16) hin drehen, und wobei das stationäre Gehäuse (10) mit einem in seinem Inneren angeordneten Saatgutausstoßzusammenbau (80) versehen ist, der ein drehbares Rad aufweist, um Saatgut aus den einzelnen Saatgutaufnahmezellen (38) heraus und zum Saatgutauslass (16) zu bewegen, **dadurch gekennzeichnet, dass** das stationäre Gehäuse (10) mit einer sich radial erstreckenden Bürste (24) versehen ist, die an einem ersetzbaren Bürstenhalterring (20) befestigt ist, und dass der Saatgutausstoßzusammenbau (80) am Bürstenhalterring (20) befestigt ist.

2. Messsystem nach Anspruch 1, **dadurch gekennzeichnet, dass** das drehbare Rad ein Zahnrad (86) ist, das sich nach außen erstreckende, radiale Zähne (90) aufweist, die in die Saatgutaufnahmezellen (38) eintreten.

3. Messsystem nach Anspruch 1 oder 2, **dadurch gekennzeichnet, dass** der Saatgutausstoßzusammenbau (80) einteilig mit dem Bürstenhalterring (20) gestaltet ist.

4. Messsystem nach einem der Ansprüche 1 bis 3, **dadurch gekennzeichnet, dass** der Saatgutausstoßzusammenbau (80) das Rad und ein am Bürstenhalterring (20) befestigtes Gehäuse (84) umfasst, und dass das Rad am Gehäuse (84) drehbar befestigt ist.

5. Messsystem nach einem der Ansprüche 1 bis 4, **dadurch gekennzeichnet, dass** das kreisförmige Element eine Glocke (34) ist, um deren Umfang die Saatgutaufnahmezellen (38) verteilt sind.

6. Messsystem nach einem der Ansprüche 1 bis 5, **dadurch gekennzeichnet, dass** das Rad sich um eine Achse dreht, die parallel zur Drehachse des kreisförmigen Elements ist.

## Claims

1. A seed meter for an agricultural seeding machine, the seed meter comprising:
a stationary housing (10) having a seed inlet (14) for receiving seed and a seed outlet (16) through which metered seed is dispensed;
a circular member being rotatively mounted to the stationary housing, the circular member having a series of individual seed receiving cells (38) for receiving and transporting individual seeds, the circular member defines an axis of rotation;
wherein seeds entering the stationary housing (10) through the seed inlet (14) form a seed puddle between the stationary housing (10) and the circular member, individual seeds located in this puddle are taken up by the seed receiving cells (38) in the circular member as the seed receiving cells (38) are rotated through the puddle, seed is released therefrom as the seed receiving cells (38) are rotated towards the seed outlet, the stationary housing (10) is further provided in its interior with a seed knockout assembly (80) having a rotatable wheel for driving seed from the individual seed receiving cells (38) to the seed outlet (16), **characterized in that** the stationary housing is provided with a radially extending brush (24) mounted to a replaceable brush holder ring (20), the seed knockout assembly (80) being mounted to the brush holder ring (20).

2. The seed meter as defined by claim 1 wherein the rotatable wheel is a sprocket wheel (6) having outwardly extending radial teeth (90) that enter the seed receiving cells (38).

3. The seed meter as defined by claim 1 or 2 wherein the seed knockout assembly (80) is unitary with the brush holder ring (20).

4. The seed meter as defined by one of claims 1 to 3 wherein the seed knockout assembly (80) comprises the wheel and a housing (84) that is mounted to the replaceable brush holder ring (20), the wheel being rotatively mounted to the housing.

5. The seed meter as defined by one of claims 1 to 4 wherein the circular member is a bowl (34) with the seed receiving cells (38) distributed about its outer periphery.

6. The seed meter as defined by one of claims 1 to 5 wherein the wheel rotates around a shaft extending parallel to the axis of rotation of the circular member.

## Revendications

1. Système de mesure pour un semoir agricole du type comprenant un carter fixe (10) présentant une entrée de semences (14), destinée à la réception des semences et une sortie de semences (16), par laquelle la quantité mesurée de semences est distribuée, un élément de forme circulaire, disposé rotatif autour d'un axe dans le carter fixe (10) et comportant des cellules de prélèvement de semences (38) destinées au prélèvement et au transport des graines de semences individuelles, par lequel les semences entrant par l'entrée de semences (14) dans le carter fixe (10) forment un entassement de semences entre le carter fixe (10) et l'élément de forme circulaire et les graines individuelles de semences sont prélevées sur l'entassement par les cellules de prélèvement de semences (38) de l'élément de forme circulaire quand les cellules de prélèvement de semences tournent à travers l'entassement de semences et en sont extraites et tournent en direction de la sortie de semences (16), le carter fixe (10) étant équipé intérieurement d'un équipage d'expulsion de semences (80) qui comporte une roue rotative destinée à extraire les semences des cellules de prélèvements individuelles (38) et à les déplacer jusqu'à la sortie de semences (16), **caractérisé en ce que** le carter fixe (10) comporte une brosse s'étendant radialement (24) et fixée à un anneau de support de brosse remplaçable (20) et **en ce que** l'équipage d'expulsion de semences (80) est fixé à l'anneau de support de brosse (20).

2. Système de mesure selon la revendication 1, **caractérisé en ce que** la roue rotative consiste en une roue dentée (86) qui présente des dents (90) s'étendant radialement vers l'extérieur et qui engrène avec les cellules de prélèvements individuels de semences (38).

3. Système de mesure selon la revendication 1 ou la revendication 2, **caractérisé en ce que** l'équipage d'expulsion de semences (80) est réalisé en une seule pièce avec l'anneau de support de brosse (20).

4. Système de mesure selon l'une quelconque des revendications 1 à 3, **caractérisé en ce que** l'équipage d'expulsion de semences (80) se compose de la roue et d'un boîtier (84) fixé à l'anneau de support de brosse (20), et **en ce que** la roue est montée rotative sur le boîtier (84).

5. Système de mesure selon l'une quelconque des revendications 1 à 4, **caractérisé en ce que** l'élément de forme circulaire consiste en une cloche (34) sur la périphérie intérieure de laquelle sont réparties les cellules de prélèvement de semences (38).

6. Système de mesure selon l'une quelconque des revendications 1 à 5, **caractérisé en ce que** la roue tourne autour d'un axe qui est parallèle à l'axe de rotation de l'élément de forme circulaire.
